Europäisches Patentamt

European Patent Office

Office européen des brevets

(19)

(11) **EP 1 234 630 A1**

(12) **DEMANDE DE BREVET EUROPEEN**

(43) Date de publication:
**28.08.2002 Bulletin 2002/35**

(51) Int Cl.[7]: **B23H 1/02**

(21) Numéro de dépôt: **01104691.9**

(22) Date de dépôt: **26.02.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(71) Demandeur: **CHARMILLES TECHNOLOGIES S.A.
1217 Meyrin 1 (CH)**

(72) Inventeur: **Gamboni, Aldo
1209 Geneve (CH)**

(74) Mandataire: **Micheli & Cie
Rue de Genève 122,
Case Postale 61
1226 Genève-Thonex (CH)**

(54) **Procédé et dispositif d usinage par électroérosion**

(57)    Dans le procédé et le dispositif d'usinage par électroérosion on génère au moyen d'une unité de commande contrôlant des interrupteurs (Si, S2) des impulsions de courant (Ig) de forme quadrilatère comportant une période de montée de courant ($P_A$), une période de courant intermédiaire ($P_{RL}$) et une période de descente ($P_F$). Chaque impulsion est d'une part précédée d'une période préliminaire (Pp) comportant une durée de charge (Pc) et une durée d'attente ($P_D$) et durant laquelle une tension d'amorçage est appliquée seule, et d'autre part suivie d'une période de pause ($P_B$). Les durées des périodes de montée (PA) et intermédiaire (PRL) sont variables et déterminées en fonction de la période préliminaire (Pp), de façon que ces durées de montée et intermédiaire soient raccourcies ($P_{AC}$, $P_{RLC}$), mais non nulles, pour des durées de la période préliminaire (Pp) réduites. On obtient ainsi une optimalisation des paramètres d'usinage avec rendement élevé, fréquence des décharges plus basses, pertes de commutation réduites, tout en remédiant efficacement aux effets négatifs des courts-circuits.

Fig.2A

EP 1 234 630 A1

**Description**

La présente invention concerne un procédé d'usinage par électroérosion selon lequel on usine une pièce au moyen d'une électrode-outil séparée l'une de l'autre par un espace de travail en appliquant des impulsions de courant entre la pièce et l'électrode-outil au moyen d'un circuit électrique comportant au moins une source de tension et une unité de commande.

De façon générale en électroérosion les courts-circuits entre l'électrode-outil et la pièce surviennent d'une manière aléatoire. Lors de l'usinage avec une électrode-fil, le fil est d'une part écarté de la pièce par la poussée des décharges érosives de l'usinage, et d'autre part sollicité en direction de cette pièce par l'attraction électrostatique existant entre le fil et la pièce. Lors des courts-circuits et d'autres impulsions indésirées, cet équilibre est rompu et la poussée de l'usinage sur le fil s'effondre instantanément et le fil a tendance à se coller à la pièce.

L'usinage risque donc de s'interrompre et le fil se comportant comme un fusible peut se rompre, ce qui nécessite un temps d'arrêt prolongé. Dans ces conditions le rendement d'usinage est très faible.

En outre, l'expérience a démontré que l'efficacité de l'usinage électroérosif par fil augmente avec le courant moyen. On a également reconnu que des pentes de descente raides du courant aboutissant à des périodes de pause sont nécessaires pour qu'il y ait éjection efficace de la matière fondue. Ainsi, dans la plupart des dispositifs connus, on a opté pour des formes d'ondes triangulaires. Dans le cas de ces dernières, on accroît l'efficacité de l'usinage en augmentant la fréquence des triangles de courant ou la valeur crête du courant ou les deux. L'inconvénient majeur de ce type de solution largement répandue est que les pertes ohmiques augmentent avec le carré de l'intensité du courant efficace et croissent également avec la fréquence des impulsions du fait des pertes de commutations importantes.

La présente invention a pour but de remédier aux inconvénients précités et de créer un procédé et un dispositif permettant :

- de maintenir l'usinage en vie malgré le danger de court-circuit ou la présence d'un gap contaminé,
- d'éviter la fusion et la rupture du fil,
- d'optimaliser les paramètres d'usinage de façon à obtenir un rendement d'usinage élevé, une diminution des pertes ohmiques, un courant moyen élevé pour un courant efficace modéré, donc un facteur de forme réduit, correspondant à un rapport faible du courant efficace sur le courant moyen, et des pertes de commutation réduites.

L'invention est caractérisée à cet effet par le fait que l'on génère des impulsions de courant de forme quadrilatère en effectuant une montée de courant pendant une période de montée, une période intermédiaire de courant et une période de descente et d'annulation du courant, chaque impulsion de courant étant d'une part précédée d'une période préliminaire pendant laquelle une tension d'amorçage est appliquée seule et d'autre part suivie d'une période de pause et par le fait que les durées de la période de montée et de la période intermédiaire sont modifiées en fonction de l'évolution des conditions électriques de tension et/ou de courant au niveau du gap durant ladite période préliminaire.

Les courts-circuits peuvent ainsi être anticipés grâce à des impulsions moins énergétiques qui ont la propriété de maintenir l'amorçage en vie malgré le danger de court-circuit imminent, tout en évitant la fusion et la rupture du fil. L'invention permet donc de remédier efficacement aux effets négatifs des courts-circuits et d'autres impulsions désavantageuses, tout en rendant possible une optimalisation des paramètres d'usinage, à savoir un rendement d'usinage élevé, une diminution des pertes ohmiques et un facteur de forme à valeur modérée. On obtient de façon inattendue un effet érosif ou rendement élevé avec une fréquence des décharges plus basse, ce qui participe à réduire les pertes de commutation. Pour un courant moyen donné, l'effet érosif est augmenté et l'échauffement fortement diminué. L'ensemble des conditions et des paramètres d'usinage est donc amélioré et optimalisé grâce aux caractéristiques précitées.

Avantageusement, le procédé est caractérisé par le fait que l'on contrôle les durées des différentes périodes des impulsions électriques de façon à satisfaire les conditions suivantes :

a) $P_C \geq P_{RA}$ ou $\quad$ $P_{CD} \leq P_{CN}$ $\quad$ ou $\quad$ $P_D \leq N_{DR}$ :
$\Rightarrow$ impulsion courte :

$P_{AC} = k1 \cdot P_A$
$P_{RLC} = k2 \cdot P_{RL}$
$0,1 \leq k1, k2 \leq 0,8$

b) $P_C < P_{RA}$ $\quad$ et $\quad$ $P_{CD} > P_{CN}$ $\quad$ et $\quad$ $P_D > N_{DR}$
$\Rightarrow$ impulsion normale :

$P_A, P_{RL}$

$$P_{RL} = k3 \cdot P_A$$

où

$P_C$ correspond à la durée de charge mesurée entre un instant initial $T_I$ correspondant au moment où la tension d'amorçage est enclenchée et un instant de charge $T_C$ lorsque la tension $U_g$ croissante devient égale à une valeur prédéterminée $V_T$;

$P_D$ correspond à la durée d'attente mesurée entre l'instant de charge $T_C$ et un instant d'attente $T_{CD}$ lorsque la tension $U_g$ est retombée à la valeur prédéterminée $V_T$;

$P_{CD}$ est la somme des durées de charge et d'attente;

$P_{RA}$ est la durée de référence inférieure entre l'instant initial $T_I$ et un instant de référence inférieur $T_{RA}$;

$N_{DR}$ est la durée d'attente maximale admise pour effectuer une impulsion courte;

$P_{CN}$ est la durée entre l'instant initial $T_I$ et l'instant limite $T_{CN}$ obtenu en ajoutant la durée d'attente maximale $N_{DR}$ à la durée de charge $P_C$;

$P_A$ est la durée de la période de montée;

$P_{AC}$ est la durée de la période de montée raccourcie;

$P_{RL}$ est la durée de la période intermédiaire;

$P_{RLC}$ est la durée de la période intermédiaire raccourcie;

k1, k2 et k3 sont des constantes de proportionnalité;

Favorablement les conditions suivantes satisfaites :

$$0,3 \leq k1 = k2 \leq 0,6$$

et de préférence :

$$0,4 \leq k1 = k2 \leq 0,5 \text{ et } k3 = 1 \text{ ou } 2$$

Ces caractéristiques permettent d'obtenir un contrôle très simple du quota énergétique de chaque impulsion.

Selon une variante élaborée, les durées de la période de montée et de la période intermédiaire sont reliées à la durée d'attente ou à la somme des durées de charge et d'attente par deux fonctions continues ou discontinues donnant des valeurs réduites, mais non nulles des durées des périodes de montée et intermédiaire pour des valeurs réduites de la durée d'attente ou de ladite somme.

L'invention se rapporte également à un dispositif pour la mise en oeuvre d'un procédé d'usinage par électroérosion comprenant une électrode-outil séparée par une fente de travail d'une pièce, un circuit électrique avec au moins une source de tension et une unité de commande agencées de façon à appliquer des impulsions de courant entre l'électrode-outil et la pièce, caractérisé par le fait que l'unité de commande est agencée de façon à générer des impulsions de courant de forme quadrilatère en effectuant une montée de courant pendant une période de montée, une période intermédiaire de courant et une période de descente et d'annulation du courant, chaque impulsion de courant étant d'une part précédée d'une période préliminaire pendant laquelle une tension d'amorçage est appliquée seule et d'autre part suivie d'une période de pause, et par le fait que l'unité de commande est agencée pour modifier les durées de la période de montée et de la période intermédiaire en fonction de l'évolution des conditions électriques de tension et/ou de courant au niveau du gap durant ladite période préliminaire.

Ce dispositif assure des avantages similaires à ceux exposés en référence au procédé.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution et des variantes.

La figure 1 illustre schématiquement un mode d'exécution du dispositif selon l'invention.

Les figures 2A et 2B représentent des séquencements de cinq différents signaux obtenus avec le circuit de la figure 1 en fonction du temps.

La figure 3 représente un diagramme de la fonction liant la durée de la période d'amorçage $P_{CD}$ aux durées des périodes de montée du courant $T_A$ et intermédiaire $T_{RL}$ d'une variante du procédé.

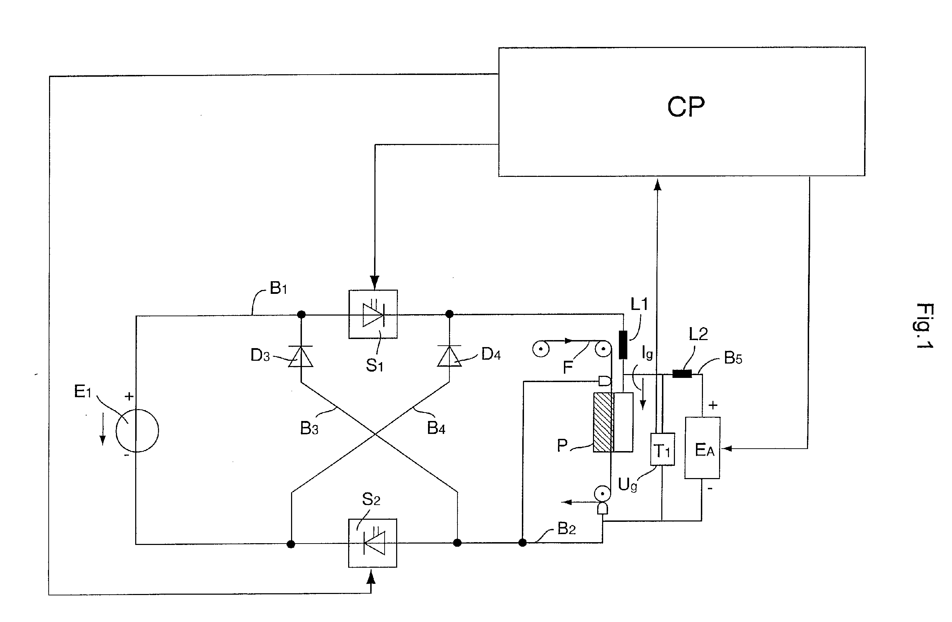

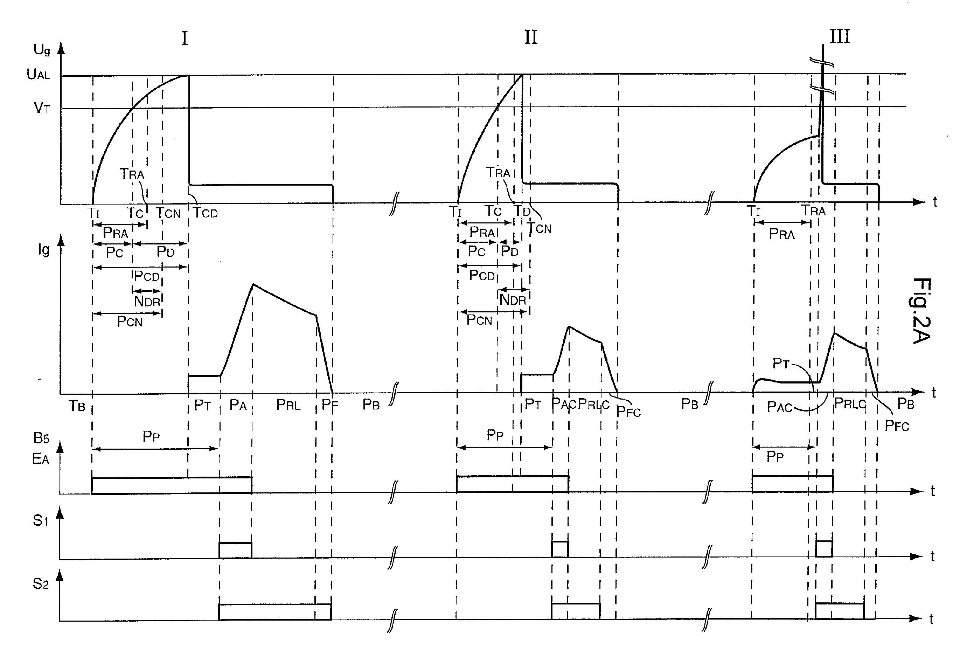

Le mode d'exécution de circuit illustré à la figure 1 comprend une source de tension $E_1$ à basse impédance destinée à fournir le courant d'usinage nécessaire pour entretenir les impulsions de courant ou décharges érosives. Cette source $E_1$ délivre une tension continue stabilisée et est capable de fournir de grandes intensités de courant, sans baisse importante de tension. La borne positive de la source $E_1$ est reliée à la pièce à usiner P par une branche

$B_1$ comportant un interrupteur statique S1, L 1 représentant l'inductance parasite de ligne.

La borne négative de la source de tension $E_1$ est reliée par une branche $B_2$ à l'électrode-fil F séparée par un gap G d'une pièce P. Cette branche $B_2$ comprend un interrupteur statique $S_2$. Les branches $B_1$ et $B_2$ sont en outre reliées par une branche $B_3$ comportant une diode $D_3$ et une branche $B_4$ comportant une diode $D_4$, la branche $B_3$ étant connectée aux entrées des deux interrupteurs $S_1$ et $S_2$, tandis que la branche $B_4$ est reliée aux sorties des deux interrupteurs $S_1$ et $S_2$. Les deux branches $B_3$ et $B_4$ sont ainsi agencées de façon croisée entre les deux branches $B_1$ et $B_2$ portant les interrupteurs $S_1$ et $S_2$.

Un circuit d'amorçage $B_5$ est branché en parallèle entre l'électrode-fil F et la pièce P et comprend un générateur d'amorçage $E_A$, $L_2$ étant l'inductance parasite de ligne du circuit d'amorçage $B_5$.

Le circuit possède en outre un circuit de mesure $T_1$ branché entre l'électrode-fil F et la pièce P pour mesurer la tension $U_g$ aux bornes du gap G.

L'ensemble de ce circuit est commandé par une unité de commande électronique CP recevant des signaux du circuit de mesure $T_1$ et adressant des signaux de commande aux interrupteurs $S_1$ et $S_2$ et au générateur d'amorçage $E_A$.

Cette unité de commande CP peut être réalisée selon les techniques digitales connues, de préférence avec un système à microprocesseur. Elle assume une série de tâches logiques, dont la première est de piloter le courant en envoyant des signaux du type "tout ou rien" aux interrupteurs $S_1$, $S_2$, de manière à générer des impulsions de courant de forme voulue.

Le fonctionnement du circuit selon la figure 1 comprend un séquencement des signaux en fonction du temps tel qu'illustré aux figures $2_A$ et $2_B$, avec en première ligne la tension $U_g$ aux bornes du gap G, en seconde ligne le courant $I_g$ traversant le gap G, en troisième ligne les périodes d'enclenchement et de déclenchement du circuit d'amorçage $B_5$ et en quatrième et cinquième lignes les périodes conductrices et non conductrices des interrupteurs $S_1$, $S_2$.

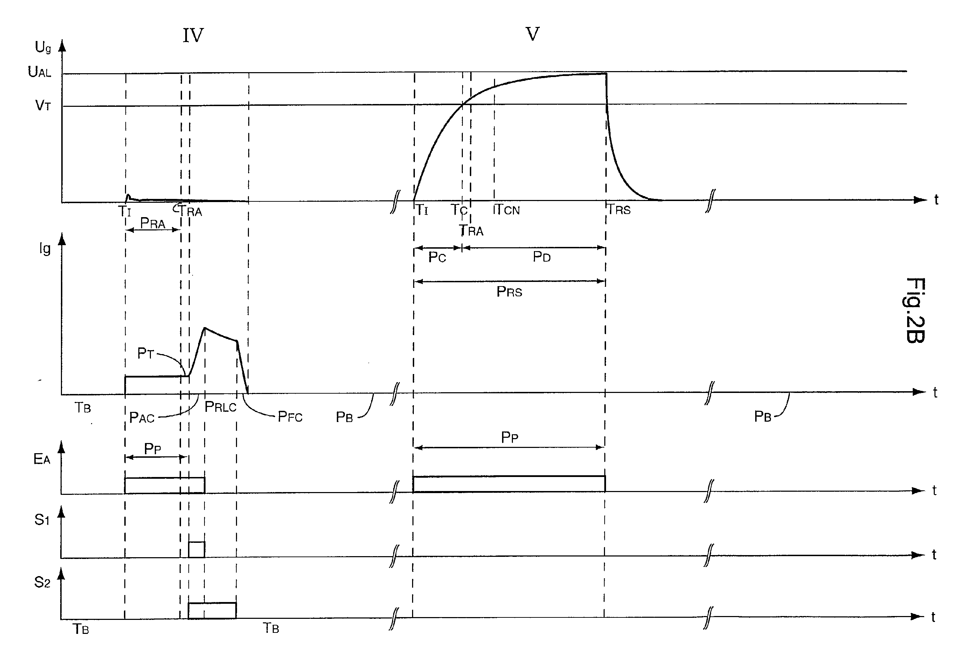

La première impulsion I illustrée à la figure 2A correspond à une impulsion de courant dite normale.

Une période préliminaire ou d'amorçage $P_p$ est obtenue en enclenchant le circuit d'amorçage $B_5$ qui est à haute impédance et qui établit une tension $U_g$ croissante aux bornes du gap G mesurée par le circuit de mesure $T_1$.

On observe les durées, périodes et instants suivants lors de l'établissement de cette impulsion de courant:

- $T_I$ constitue un instant initial correspondant au moment où la tension d'amorçage est enclenchée;
- $T_c$ correspond à un instant de charge lorsque la tension $U_g$ croissante devient égale à une valeur prédéterminée $V_T$ qui est ici fixée à 0,75 $U_{AL}$, $U_{AL}$ étant la tension du générateur d'allumage $E_A$ et correspond à une valeur asymptotique de la tension $U_g$ croissante;
- $T_{CD}$ correspond à un instant d'attente lorsque la tension $U_g$ est retombée à la valeur prédéterminée $V_T$, lors de l'amorçage de la décharge érosive;
- $P_c$ correspond à une durée de charge mesurée entre l'instant initial $T_I$ et l'instant de charge $T_C$;
- $P_D$ correspond à une durée d'attente comprise entre l'instant de charge $T_C$ et l'instant d'attente $T_{CD}$;
- $P_{CD}$ correspond à une durée obtenue par l'addition de la durée de charge $P_C$ et de la durée d'attente $P_D$ et correspond donc à une durée d'amorçage;
- $P_P$ est la période préliminaire correspondant à l'application de la tension d'amorçage seule;
- $T_{CN}$ correspond à un instant limite obtenu par l'addition d'une durée limite prédéterminée $N_{DR}$ à la durée de charge PC mesurée, $N_{DR}$ correspondant à une durée d'attente maximale admise pour effectuer une impulsion courte;
- $P_{CN}$ correspond à une durée d'attente limite entre l'instant initial $T_I$ et l'instant limite $T_{CN}$;
- $T_{RA}$ correspond à un instant de référence inférieure séparé de l'instant initial $T_I$ par une durée de référence inférieure $P_{RA}$;
- $T_{RS}$ correspond à un instant de référence supérieure séparé de l'instant initial $T_I$ par une durée de référence supérieure $P_{RS}$.

Après l'apparition d'un courant $I_g$ à travers le gap, on relève les périodes suivantes :

- $P_T$ correspond à une période de traitement et de commutation lors de laquelle l'unité de commande CP effectue un traitement de données et qui s'achève avec la fermeture des deux interrupteurs $S_1$ et $S_2$ et l'application de la tension de la source $E_1$;
- $P_A$ correspond à une période de montée du courant $I_g$;
- $P_{RL}$ correspond à une période intermédiaire ou de roue libre;
- $P_F$ correspond à une période de descente du courant; et
- $P_B$ correspond à une période de pause entre deux impulsions de courant.

Lors de l'établissement de cette impulsion normale I la tension $U_g$ croissante atteint la valeur prédéterminée $V_T$ à un instant de charge $T_C$ mesuré qui se situe avant l'instant de référence inférieure $T_{RA}$. Ensuite au moment de l'instant d'attente $T_{CD}$, l'amorçage a lieu, un courant Ig commence à traverser le gap et la tension $U_g$ chute brusquement. Dans le cas de l'impulsion I, l'instant d'attente $T_{CD}$ se situe après l'instant limite $T_{CN}$ et l'unité de commande CP est donc programmée de façon à effectuer une impulsion de durée normale, non raccourcie, comportant une énergie totale normale et non réduite.

La période préliminaire Pp prend fin avec la chute brusque de la tension $U_g$ et avec l'apparition d'un courant $I_g$ traversant le gap, donc avec l'amorçage d'une impulsion de courant ou décharge érosive. Cette chute est détectée par le circuit de mesure $T_1$ transmettant un signal à l'unité de commande CP, qui à son tour commande la fermeture des deux interrupteurs ou transistors $S_1$ et $S_2$ pour les mettre dans leur état conducteur. Ceci a lieu pendant la période de traitement et de commutation $P_T$ qui dure typiquement 600 nanoseconde, mais au maximum une microseconde, lors de laquelle l'intensité du courant traversant le gap reste faible. Après cette période de traitement $P_T$ l'intensité du courant traversant le gap croit rapidement avec une pente

$$dI_g/dt = (U_1 - U_g)/L_1$$

où

$I_g$ est le courant traversant le gap,
$U_1$ est la tension de la source $E_1$,
$U_g$ est la tension aux bornes du gap.

Les deux diodes $D_3$ et $D_4$ sont alors bloquées, tandis que la tension $U_g$ aux bornes du gap reste à une valeur faible d'environ 20 V sensiblement constante.

Après cette période de montée $P_A$ de durée prédéterminée, la montée du courant est arrêtée lorsque l'unité de commande CP ouvre l'un ou l'autre des interrupteurs $S_1$ ou $S_2$. On arrive alors à la période intermédiaire $P_{RL}$ où le courant circule dans le circuit de relaxation $L_1$, gap, $D_3$, $S_1$, si $S_2$ est non conducteur ou $L_1$, gap, $S_2$, $D_4$, si $S_1$ est non conducteur. Le courant $I_g$ ne diminue qu'avec une pente modérée :

$$dI_g/dt = -U_g/L_1$$

Cette période intermédiaire $P_{RL}$ présente une durée prédéterminée commandée par l'unité de commande CP et prend fin avec l'ouverture du second interrupteur $S_2$ ou $S_1$.

L'énergie accumulée dans l'inductance $L_1$ se dissipe alors sous forme d'un courant qui débloque les deux diodes $D_3$ et $D_4$. On obtient le circuit de relaxation $L_1$, gap, $D_3$, source $E_1$ à l'envers, $D_4$. Il est bien entendu que la source $E_1$ peut supporter sans dommage un courant qui la traverse en allant de la borne positive à la borne négative tout en restituant à cette source une partie de l'énergie accumulée dans l'inductance $L_1$.

On observe alors une descente rapide du courant Ig avec une pente

$$dI_g/dt = -(U_1 + U_g)/L_1.$$

Cette descente rapide a lieu pendant une période de descente $P_F$ relativement courte après laquelle on entre dans une période de pause $P_B$ de durée prédéterminée. La tension $U_g$ reste constante pendant la décroissance du courant. La forme des impulsions de courant obtenue est sensiblement quadrilatère trapézoïdale, avec une période de montée $P_A$ du courant à flanc raide, une période intermédiaire $P_{RL}$ ou période de roue libre prédéterminée lors de laquelle le courant ne diminue que faiblement et une période de descente $P_F$ du courant à flanc raide.

On observe donc la succession des périodes et temps suivants : une période préliminaire $P_P$ avec une durée de charge $P_C$ et une durée d'attente $P_D$, une période de traitement et de commutation $P_T$, une période de montée de courant $P_A$, une période intermédiaire ou de roue libre $P_{RL}$, une période de descente $P_F$ et une période de pause $P_B$.

Les figures $2_A$ et $2_B$ montrent également que les durées de la période de montée $P_A$ et de la période intermédiaire $P_{RL}$ peuvent être modifiées en fonction de l'évolution des conditions électriques de tension et/ou de courant au niveau du gap durant la période préliminaire $P_p$.

En fait les durées de la période de montée $P_A$ et de la période intermédiaire $T_{RL}$ sont modifiées en fonction d'une durée comprise entre le moment de l'enclenchement de la source $E_A$ et de la tension d'amorçage $U_{AL}$ et le moment de l'apparition d'un courant traversant le gap G.

Les durées de période de montée et de la période intermédiaire sont selon l'invention raccourcies lorsque la durée pour l'apparition d'un courant traversant le gap est égale ou inférieure à la durée limite $P_{CN}$ à compter de l'enclenchement de la tension d'amorçage. Comme on a vu précédemment cette durée limite est obtenue en ajoutant une durée limite $N_{DR}$ à la durée de charge $P_C$

$$P_{CN} = P_C + N_{DR}$$

En mesurant la tension Ug aux bornes du gap avec le circuit de mesure $T_1$, l'unité de commande CP pourra être agencée pour raccourcir la période de montée $P_A$ et la période intermédiaire $P_{RL}$ lorsque

$$P_{CD} \leq P_{CN}$$

En outre, les durées de la période de montée $P_A$ et de la période intermédiaire $P_{RL}$ pourront être raccourcies par l'unité de commande CP lorsque la tension $U_g$ aux bornes du gap n'atteint pas la valeur prédéterminée $V_T$ après une durée de référence inférieure $P_{RA}$ à compter de l'enclenchement de la tension d'amorçage. L'unité de commande CP effectue alors directement une période de montée raccourcie $P_{AC}$ après avoir atteint le temps de référence inférieur $T_{RA}$. La période de montée raccourcie $P_{AC}$ est alors suivie d'une période intermédiaire raccourcie $P_{RLC}$.

Ainsi l'unité de commande CP pourra être agencée de façon à contrôler les interrupteurs $S_1$, $S_2$ et donc les périodes de montée et intermédiaires en fonction des événements survenant durant la période préliminaire $P_p$ de façon à satisfaire les conditions suivantes :

a) $P_C \geq P_{RA}$ ou $\quad P_{CD} \leq P_{CN} \quad$ ou $\quad P_D \leq N_{DR}$ :
$\Rightarrow$ impulsion courte :

$$P_{AC} = k1 \cdot P_A$$
$$P_{RLC} = k2 \cdot P_{RL}$$
$$0,1 \leq k1, k2 \leq 0,8$$

b) $P_C < P_{RA} \quad$ et $\quad P_{CD} > P_{CN} \quad$ et $\quad P_D > N_{DR}$;
$\Rightarrow$ impulsion normale :

$$P_A, P_{RL}$$
$$P_{RL} = k3 \cdot P_A$$

où k1, k2, k3 sont des constantes de proportionnalité.

Favorablement les conditions suivantes sont respectées :

$$0,3 \leq k1 = k2 \leq 0,6 \text{ et}$$

de préférence :

$$0,4 \leq k1 = k2 \leq 0,5 \text{ et } P_{RL} = 1 \text{ ou } 2_{PA}, P_{RLC} = 1 \text{ ou } 2 P_{AC}$$

Dans le mode d'exécution illustré aux figures 2A et 2B

$$k1 = k2 = 0,5 \; ; k3 = 2$$

En référence aux figures 2A et 2B, on observe les différentes impulsions de courant suivantes :

La première impulsion I possède des périodes de montée $P_A$ et intermédiaire $P_{RL}$ de durée non raccourcie, étant donné que $P_C < P_{RA}$ et $P_{CD} > P_{CN}$. Lors de la seconde impulsion II, l'unité de commande a détecté que $P_C < P_{RA}$, cependant $P_{CD} < P_{CN}$. La période d'amorçage $P_{CD}$ et la durée d'attente $P_D$ sont ici plus courtes que celles d'une impulsion normale. L'unité de commande CP commande donc des périodes de montée $P_{AC}$ et intermédiaire $P_{RLC}$ raccourcies. La période de descente $P_{FC}$ est bien entendu également raccourcie.

Dans le troisième type d'impulsion III, la tension $U_g$ aux bornes du gap n'atteint pas la valeur prédéterminée $V_T$ lors de l'instant de référence inférieur $T_{RA}$. Cependant un courant $I_g$ circule immédiatement après l'enclenchement du circuit d'amorçage $B_5$, ce qui peut se produire dans le cas d'un gap contaminé. Après une période de traitement et de commutation $P_T$ raccourcie, les deux interrupteurs $S_1$, $S_2$ sont mis dans leur état conducteur, ce qui provoque une montée brusque de la tension $U_g$ étant donné que la source $E_1$ possède une tension $U_1$ nettement supérieure à celle $U_{AL}$ du générateur d'amorçage $E_A$.

Le courant $I_g$ monte après un retard aléatoire. La durée de la période de montée $T_{AC}$ est raccourcie par l'unité de commande CP :

$$P_C \geq P_{RA} \Rightarrow P_{AC} = k1 \, P_A \qquad P_{RLC} = k2 \, P_{RL}$$

k1 = k2 = 0,5 par exemple.

La période intermédiaire $P_{RLC}$ est également raccourcie :

$$T_{RLC} = k3 \, T_{AC}$$

k3 = 2 par exemple

L'énergie totale de l'impulsion III est donc fortement diminuée par rapport à une impulsion normale.

Le quatrième type d'impulsion IV représenté à la figure 2B se réfère à une impulsion se produisant lors d'un court-circuit. Dès l'enclenchement du circuit d'amorçage $B_5$ un courant significatif traverse le gap G, tandis que la tension $U_g$ reste très faible ou nulle. Après l'instant de référence inférieur $T_{RA}$, l'unité de commande CP commande la fermeture des deux interrupteurs $S_1$ et $S_2$ qui s'effectue après une période de traitement et de commutation $P_T$ réduite. Une impulsion avec des durées raccourcies de $P_{AC}$, de $T_{RLC}$ et de $T_{FC}$ est ensuite effectuée, où

$$P_{AC} = k1 \, P_A \qquad P_{RLC} = k2 \, P_{RL}$$

K1 = k2 = 0,5 par exemple.

Après la période $P_{FC}$, une nouvelle période de pause $P_B$ est effectuée.

Dans le cinquième cas de figure V représenté à la figure 2B, une tension de la valeur prédéterminée $V_T$ est obtenue après une durée de charge $P_C$ inférieure à la durée de référence inférieure $P_{RA}$ se terminant avec l'instant de référence $T_{RA}$ inférieur. La tension $U_g$ aux bornes du gap G continue ensuite à monter sans cependant qu'un courant ne traverse le gap et que l'amorçage d'une impulsion de courant n'intervienne. Après la durée de référence supérieure $P_{RS}$ se terminant avec l'instant de référence supérieure $T_{RS}$, l'unité de commande CP commande l'ouverture des deux interrupteurs $S_1$ et $S_2$ et la tension $U_g$ s'annule graduellement. On passe ainsi directement à la prochaine période de pause $P_B$ sans amorçage d'une impulsion de courant.

Pour ce cas de figure V, on aura donc comme relation

$$T_C < T_{RA} \quad T_{CD} \geq T_{RS}$$

$$\Rightarrow P_A = P_{RL} = 0$$

En ce qui concerne les impulsions des types II, III et IV, il est à relever que l'énergie totale de l'impulsion est nettement plus faible pour l'impulsion courte comportant des durées $P_{AC}$ et $P_{RLC}$ plus courtes. Il est bien entendu que la durée de descente $P_{FC}$ est également raccourcie. Ainsi, les rapports $P_{AC}/P_A$ et $P_{RLC}/P_{RL}$ pourront par exemple être fixés à 0,4 ou 0,5 mais d'autres valeurs comprises entre 0,1 et 0,8 sont également possibles.

De façon générale, il est connu que les courts-circuits en usinage à électroérosion par fil surviennent d'une manière aléatoire. Lors de l'usinage le fil F est en général éloigné de la pièce P grâce à la poussée exercée par les décharges érosives de l'usinage et sollicité vers cette pièce par l'attraction électrostatique existant entre le fil et la pièce. Lors des courts-circuits, cet équilibre est rompu et la poussée de l'usinage sur le fil s'effondre instantanément et le fil a tendance à se coller à la pièce. En effet, l'inertie mécanique du fil est moindre que celle des axes motorisés de la table, non illustrés, sur laquelle la pièce P est montée et grâce à laquelle la pièce P est déplacée par rapport au fil F. Ces axes motorisés n'auront pas le temps d'effectuer un recul de la pièce avant que l'usinage ne se bloque en court-circuit. L'usinage risque donc de s'interrompre jusqu'à ce que le mouvement de recul des axes s'effectue, ce qui engendre une baisse de rendement considérable, surtout si le phénomène est répétitif. Une conséquence encore plus grave réside dans le fait que le fil se comporte comme un fusible et se rompt, ce qui nécessite un temps d'arrêt prolongé de la machine.

Cependant en modifiant les durées de la période de montée et de la période intermédiaire des impulsions en fonction des conditions électriques de tension et/ou de courant durant la période préliminaire $P_p$, il est possible d'anticiper les courts-circuits et de décider instantanément de produire des décharges moins énergétiques, qui ont la propriété de maintenir l'usinage en vie malgré le danger de court-circuit, tout en évitant la fusion et la rupture du fil.

La poussée de l'usinage ne disparaît donc pas à l'approche du court-circuit, l'usinage ne se bloque pas et la plupart du temps il n'est pas nécessaire de reculer la pièce.

L'utilisation d'impulsions de courant de forme quadrilatère permet de moduler d'une part la durée de la période de montée $P_A$ du courant et donc sa valeur crête et d'autre part la durée de la période de roue libre $P_{RL}$ en fonction de la durée de la période préliminaire $P_p$, de la durée de charge $P_C$ et de la durée d'attente $P_D$. Cette modulation double des paramètres de l'impulsion permet de remédier efficacement aux effets négatifs des courts-circuits et d'autres impulsions désavantageuses, donc d'obtenir un système de protection anti-court-circuit (SPAC) favorable.

En outre, l'expérience a démontré que la vitesse de découpe de l'usinage électroérosif par fil augmente avec le courant moyen. On a également reconnu que des pentes de descente raides du courant aboutissant à des périodes de pause $P_B$ sont nécessaires pour qu'il y ait éjection efficace de la matière fondue. Ainsi, dans la plupart des dispositifs connus, on a opté pour des formes d'ondes triangulaires. Dans le cas de ces dernières, on accroît l'efficacité de l'usinage en augmentant la fréquence des triangles de courant ou la valeur crête du courant ou les deux. L'inconvénient majeur de ce type de solution largement répandue est que les pertes ohmiques augmentent avec le carré de l'intensité du courant efficace et croissent également avec la fréquence des impulsions du fait des pertes de commutation importantes.

Ainsi, la présente invention permet de diminuer le courant crête tout en conservant une efficacité ou rendement d'usinage élevé et des pertes de commutations modérées du fait d'une fréquence plus faible des impulsions. Le facteur de forme F défini par le rapport du courant efficace IRMS sur le courant moyen $I_{AV}$ peut être maintenu à des valeurs basses telles que 2,7 et plus petit. Le dispositif et le procédé possèdent une grande souplesse intrinsèque dans la génération d'impulsions de courant. Il permet d'obtenir un courant moyen, donc un rendement élevé ainsi qu'un facteur de forme F réduit avec une fréquence de travail relativement basse. Le principe des impulsions quadrilatères avec la durée de roue libre $P_{RL}$ et la durée de montée de courant $P_A$ dépendant de la période préliminaire à l'impulsion permet d'obtenir une protection efficace contre les courts-circuits et les autres impulsions non désirées en minimisant le quota énergétique d'une impulsion courte par rapport à celui d'une impulsion normale, de garder un même facteur de forme avantageux, d'augmenter le courant moyen pour une fréquence donnée, de diminuer le courant crête et l'échauffement tout en augmentant le rendement et l'effet érosif. Pour un effet érosif identique, la fréquence des décharges peut être plus basse, ce qui contribue efficacement à réduire les pertes de commutations.

Il est bien entendu que les fonctions liant la durée de la période d'amorçage $P_{CD}$ et/ou d'attente $P_D$, la durée de la période de montée $P_A$, $P_{AC}$ et la durée de la période intermédiaire $P_{RL}$, $P_{RLC}$ pourront être choisies de façon différente. Ainsi par un choix adéquat des valeurs des constantes de proportionnalité k1, k2 et k3 l'énergie totale des impulsions, ainsi que leur forme respective pourront être prévues et effectuées selon l'évolution des conditions électriques de tension et/ou de courant au niveau du gap durant la période préliminaire $P_p$. Pour chacun des types d'impulsions I à V on pourra ainsi prévoir une forme quadrilatère avec des proportions différentes.

Selon une variante, les valeurs de $P_A$ et $P_{RL}$ pourront être des fonctions linéaires de $P_{CD}$ ou de $P_D$ comportant une valeur de $P_A$ et de $P_{RL}$ non nulle pour une valeur de $P_{CD}$ ou $P_D$ pratiquement nulle. Les fonctions linéaires pourront êtres limitées vers les valeurs supérieures de $P_{CD}$ de façon que $P_A = P_{RL} = 0$ pour $P_{CD}$ (ou $P_D$) supérieur à une période de référence supérieure $P_{RS}$.

Selon une autre variante, les valeurs de la période de montée $P_A$ et de la période intermédiaire $P_{RL}$ sont reliées à la durée de la période $P_{CD}$ par une fonction et une courbe continues donnant des valeurs réduites, mais non nulles, des durées des périodes de montée de courant $P_A$ et intermédiaire $P_{RL}$ pour des valeurs réduites de $P_{CD}$.

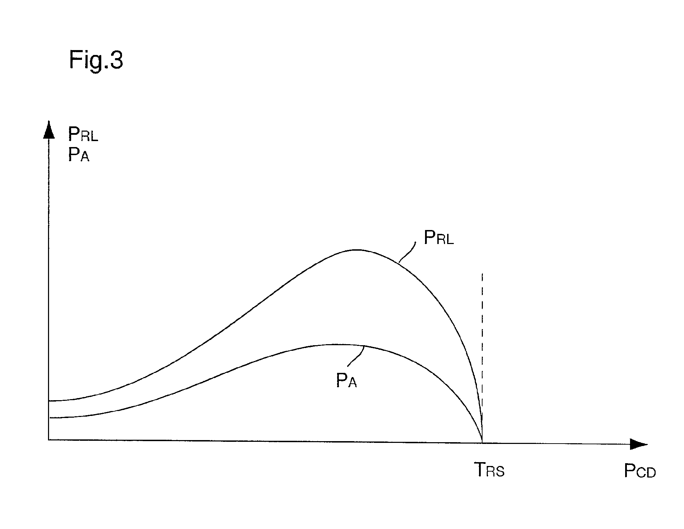

Une telle variante est illustrée à la figure 3 et comprend deux courbes $P_A = f1 (P_{CD})$ et $P_{RL} = f2 (P_{CD})$. On pourra bien entendu avoir uniquement une seule fonction liant $P_A$ ou $P_{RL}$ à $P_{CD}$; $P_A$ et $P_{RL}$ étant alors liés par une constante de proportionnalité k3. Il est également possible d'avoir des fonctions $P_A = f1'(P_D)$ et $P_{RL} = f2'(P_D)$.

Il est bien entendu que les modes de réalisation décrits ci-dessus ne présentent aucun caractère limitatif et qu'ils peuvent recevoir toutes modifications désirables à l'intérieur du cadre tel que défini par la revendication 1. En particulier, le circuit électrique de la figure 1 pourra être constitué de façon différente, mais permettant d'obtenir les impulsions quadrilatères décrites. Il pourra par exemple n'avoir qu'un seul générateur remplissant les fonctions d'amorçage et d'entretien des décharges. La période intermédiaire pourra également avoir un courant pratiquement constant contrôlé par l'ouverture et la fermeture des interrupteurs $S_1$ et $S_2$. Bien que le procédé et le dispositif décrits sont particulièrement utiles dans le cadre de l'électroérosion par fil, d'autres types d'électroérosion pourront également être envisagés, tels que le milling ou l'enfonçage. Les courbes de la figure 3 pourront bien entendu présenter une toute autre forme.

**Revendications**

1. Procédé d'usinage par électroérosion selon lequel on usine une pièce (P) au moyen d'une électrode-outil (F) séparée l'une de l'autre par un gap (G) en appliquant des impulsions de courant entre la pièce et l'électrode-outil (P) au moyen d'un circuit électrique comportant au moins une source de tension ($E_1$, $E_A$) et une unité de commande (CP), **caractérisé par le fait que** l'on génère des impulsions de courant de forme quadrilatère en effectuant une montée de courant pendant une période de montée ($P_A$, $P_{AC}$), une période intermédiaire de courant ($P_{RL}$, $P_{RLC}$) et une période de descente et d'annulation du courant ($P_F$, $P_{FC}$), chaque impulsion de courant étant d'une part précédée d'une période préliminaire ($P_p$) pendant laquelle une tension d'amorçage est appliquée seule et d'autre part suivie d'une période de pause ($P_B$) et **par le fait que** les durées de la période de montée ($P_A$, $P_{AC}$) et de la période intermédiaire ($P_{RL}$, $P_{RLC}$) sont modifiées en fonction de l'évolution des conditions électriques de tension et/ou de courant au niveau du gap durant ladite période préliminaire ($P_p$).

2. Procédé selon la revendication 1, **caractérisé par le fait que** les durées de la période de montée ($P_A$, $P_{AC}$) et de la période intermédiaire ($P_{RL}$, $P_{RLC}$) sont une fonction d'une durée comprise entre un instant initial ($T_I$) de l'enclenchement de la tension d'amorçage et le moment de l'apparition d'un courant à travers le gap (G).

3. Procédé selon la revendication 1 ou 2, **caractérisé par le fait que** l'on raccourcit les durées de la période de montée ($P_{AC}$) et de la période intermédiaire ($P_{RLC}$), lorsque la durée pour l'apparition d'un courant à travers le gap est égale ou inférieure à une durée limite ($P_{CN}$) à compter de l'enclenchement de la tension d'amorçage.

4. Procédé selon la revendication 2 ou 3, **caractérisé par le fait que** l'on mesure la tension aux bornes du gap (G) et que l'on détermine une durée d'attente ($P_D$) délimitée, d'une part par un instant de charge ($T_C$) lorsque la tension croissante mesurée aux bornes du gap atteint une valeur prédéterminée ($V_T$) séparé de l'instant initial ($T_I$) de l'enclenchement de la tension d'amorçage par une durée de charge ($P_C$), et d'autre part par un instant d'attente ($T_{CD}$) lorsque la tension est retombée à une valeur égale à cette valeur prédéterminée ($V_T$), et à l'intérieur de laquelle cette tension se trouve à une valeur égale ou supérieure à ladite valeur prédéterminée ($V_T$), et **par le fait que** les durées desdites périodes de montée ($P_A$, $P_{AC}$) et intermédiaire ($P_{RL}$, $P_{RLC}$) sont une fonction de cette durée d'attente ($P_D$) ou de la somme ($P_{CD}$) des durées de charge ($P_C$) et d'attente ($P_D$).

5. Procédé selon la revendication 4, **caractérisé par le fait que** les durées desdites périodes de montée ($P_A$) et intermédiaire ($P_{RL}$) sont raccourcies lorsque ledit instant d'attente ($T_{CD}$) est antérieur ou égal à un instant limite ($T_{CN}$) obtenu en ajoutant une durée limite ($N_{DR}$) prédéterminée audit instant de charge ($T_C$) mesuré.

6. Procédé selon la revendication 4 ou 5, **caractérisé par le fait que** l'on raccourcit les durées de la période de montée ($P_{AC}$) et de la période intermédiaire ($P_{RLC}$) lorsque la tension aux bornes du gap n'atteint pas ladite valeur prédéterminée ($V_T$) à un instant de référence inférieur ($T_{RA}$) après une durée de référence inférieure ($P_{RA}$) à compter de l'enclenchement de la tension d'amorçage, et **par le fait que** l'on effectue directement une période de montée raccourcie ($P_{AC}$) après avoir atteint cet instant de référence inférieur ($T_{RA}$), la période de montée raccourcie ($P_{AC}$) étant suivie d'une période intermédiaire raccourcie ($P_{RLC}$).

7. Procédé selon l'une des revendications précédentes, **caractérisé par le fait que** l'on fixe les durées des périodes de montée ($P_A$) et intermédiaire ($P_{RC}$) à zéro, lorsqu'il n'y a pas d'apparition d'un courant à travers le gap à un instant de référence supérieur ($T_{RS}$) après une durée de référence supérieure ($P_{RS}$) à compter de l'enclenchement de la tension d'amorçage, et **par le fait que** l'on effectue directement la prochaine période de pause ($P_B$).

8. Procédé selon les revendications 5 et 6, **caractérisé par le fait que** l'on contrôle les durées des périodes de montée ($P_A$, $P_{AC}$) et intermédiaire ($P_{RL}$, $P_{RLC}$) de façon à satisfaire les conditions suivantes :

a) $P_C \geq P_{RA}$     ou     $P_{CD} \leq P_{CN}$     ou     $P_D \leq N_{DR}$ :
$\Rightarrow$ impulsion courte :

$P_{AC} = k1 \cdot P_A$
$P_{RLC} = k2 \cdot P_{RL}$
$0,1 \leq k1, k2 \leq 0,8$

b) $P_C < P_{RA}$     et     $P_{CD} > P_{CN}$     et     $P_D > N_{DR}$ :
$\Rightarrow$ impulsion normale :

$P_A$, $P_{RL}$
$P_{RL} = k3 \cdot P_A$

où

$P_C$ correspond à la durée de charge mesurée entre un instant initial $T_I$ correspondant au moment ou la tension d'amorçage est enclenchée et un instant de charge $T_C$ lorsque la tension $U_g$ croissante devient égale à une valeur prédéterminée $V_T$;

$P_D$ correspond à la durée d'attente mesurée entre l'instant de charge $T_C$ et un instant d'attente $T_{CD}$ lorsque la tension $U_g$ est retombée à la valeur prédéterminée $V_T$;

$P_{CD}$ est la somme des durées de charge et d'attente;

$P_{RA}$ est la durée de référence inférieure entre l'instant initial $T_I$ et un instant de référence inférieur $T_{RA}$;

$N_{DR}$ est la durée d'attente maximale admise pour effectuer une impulsion courte;

$P_{CN}$ est la durée entre l'instant initial $T_I$ correspondant au moment où la tension d'amorçage est appliquée et l'instant limite $T_{CN}$ obtenu en ajoutant la durée d'attente maximale $N_{DR}$ à la durée de charge $P_C$;

$P_A$ est la durée de la période de montée;

$P_{AC}$ est la durée de la période de montée raccourcie;

$P_{RL}$ est la durée de la période intermédiaire;

$P_{RLC}$ est la durée de la période intermédiaire raccourcie;

k1, k2 et k3 sont des constantes de proportionnalité.

9.  Procédé selon la revendication 8, **caractérisé par le fait que** les conditions suivantes soient satisfaites :

$$0{,}3 \leq k1 = k2 \leq 0{,}6$$

et de préférence :

$$0{,}4 \leq k1 = k2 \leq 0{,}5 \text{ et } k3 = 1 \text{ ou } 2$$

10. Procédé selon les revendications 3 et 4, **caractérisé par le fait que** les durées de la période de montée ($P_A$) et de la période intermédiaire ($P_{RL}$) sont reliées à la durée d'attente ($P_D$) ou à la somme ($P_{CD}$) des durées de charge et d'attente par deux fonctions continues ou discontinues donnant des valeurs réduites, mais non nulles, des durées des périodes de montée ($P_A$) et intermédiaire ($P_{RL}$) pour des valeurs réduites de la durée d'attente ($P_D$) ou de ladite somme ($P_{CD}$).

11. Dispositif pour la mise en oeuvre d'un procédé d'usinage par électroérosion comprenant une électrode-outil (F) séparée par une fente de travail (G) d'une pièce (P), un circuit électrique avec au moins une source de tension ($E_1$, $E_A$) et une unité de commande (CP) agencées de façon à appliquer des impulsions de courant entre l'électrode-outil (F) et la pièce (P), **caractérisé par le fait que** l'unité de commande (CP) est agencée de façon à générer des impulsions de courant de forme quadrilatère en effectuant une montée de courant pendant une période de montée ($P_A$, $P_{AC}$), une période intermédiaire de courant ($P_{RL}$, $P_{RLC}$) et une période de descente et d'annulation du courant ($P_F$, $P_{FC}$), chaque impulsion de courant étant d'une part précédée d'une période préliminaire ($P_P$) pendant laquelle une tension d'amorçage est appliquée seule et d'autre part suivie d'une période de pause ($P_B$), et **par le fait que** l'unité de commande (CP) est agencée pour modifier les durées de la période de montée ($P_A$, $P_{AC}$) et de la période intermédiaire ($P_{RL}$, $P_{RLC}$) en fonction de l'évolution des conditions électriques de tension et/ou de courant au niveau du gap durant ladite période préliminaire ($P_p$).

12. Dispositif selon la revendication 11, **caractérisé par le fait que** l'unité de commande est agencée pour contrôler les durées de la période de montée ($P_A$, $P_{AC}$) et de la période intermédiaire ($P_{RL}$, $P_{RLC}$) en fonction d'une durée comprise entre un instant initial ($T_I$) de l'enclenchement de la tension d'amorçage et le moment de l'apparition d'un courant à travers le gap (G).

13. Dispositif selon la revendication 11 ou 12, **caractérisé par le fait que** l'unité de commande est agencée pour raccourcir les durées de la période de montée ($P_{AC}$) et de la période intermédiaire ($P_{RLC}$) lorsque la durée pour l'apparition d'un courant à travers le gap est égale ou inférieure à une durée limite ($P_{CN}$) à compter de l'enclenchement de la tension d'amorçage.

**14.** Dispositif selon la revendication 12 ou 13, **caractérisé par le fait qu'**il comprend un circuit de mesure ($T_1$) agencé pour mesurer la tension aux bornes du gap (G), **par le fait que** l'unité de commande (CP) est agencée pour déterminer une durée d'attente ($P_D$) délimitée d'une part, par un instant de charge ($T_C$) lorsque la tension croissante mesurée aux bornes du gap atteint une valeur prédéterminée ($V_T$) séparée de l'instant initial ($T_I$) de l'enclenchement de la tension d'amorçage d'une durée de charge ($P_C$) et, d'autre part, par un instant d'attente ($T_{CD}$), lorsque cette tension est retombée à une valeur égale à cette valeur prédéterminée ($V_T$), et à l'intérieur de laquelle cette tension se trouve à une valeur égale ou supérieure à ladite valeur prédéterminée ($V_T$), et **par le fait que** l'unité de commande (CP) est agencée pour contrôler les durées desdites périodes de montée ($P_A$, $P_{AC}$) et intermédiaire ($P_{RL}$, $P_{RLC}$) en fonction de cette durée d'attente ($P_D$) ou de la somme ($P_{CD}$) des durées de charge ($P_C$) et d'attente ($P_D$).

**15.** Dispositif selon la revendication 14, **caractérisé par le fait que** l'unité de commande (CP) est agencée pour raccourcir lesdites périodes de montée ($P_{AC}$) et intermédiaire ($P_{RLC}$) lorsque ledit instant d'attente ($T_{CD}$) est antérieur ou égal à un instant limite ($T_{CN}$) obtenu en ajoutant une durée limite ($N_{DR}$) prédéterminée audit temps de charge ($T_C$) mesuré.

**16.** Dispositif selon la revendication 14 ou 15, **caractérisé par le fait que** l'unité de commande (CP) est agencée pour raccourcir les durées de la période de montée ($P_{AC}$) et de la période intermédiaire ($P_{RLC}$) lorsque la tension aux bornes du gap n'atteint pas ladite valeur prédéterminée ($V_T$) à un instant de référence inférieur ($T_{RA}$) après une durée de référence inférieure ($P_{RA}$) à compter de l'enclenchement de la tension d'amorçage, et **par le fait que** l'unité de commande (CP) est agencée pour exécuter directement une période de montée raccourcie ($P_{AC}$) après cet instant de référence inférieur ($T_{RA}$), la période de montée raccourcie ($P_{AC}$) étant suivie d'une période intermédiaire raccourcie ($P_{RLC}$).

**17.** Dispositif selon l'une des revendications 10 à 16, **caractérisé par le fait que** l'unité de commande (CP) est agencée pour fixer les durées des périodes de montée ($P_A$) et intermédiaire ($P_{RC}$) à zéro, lorsqu'il n'y a pas d'apparition d'un courant à travers le gap à un instant de référence supérieur ($T_{RS}$) après une durée de référence supérieure ($P_{RS}$) à compter de l'enclenchement de la tension d'amorçage, et pour effectuer directement la prochaine période de pause ($P_B$).

**18.** Dispositif selon la revendication 15 ou 16, **caractérisé par le fait que** l'unité de commande (CP) est agencée pour contrôler les durées des périodes de montée ($P_A$, $P_{AC}$) et intermédiaire ($P_{RL}$, $P_{RLC}$) de façon à satisfaire les conditions suivantes :

a) $T_C \geq T_{RA}$     ou     $T_{CD} \leq T_{CN}$     ou     $PD \leq N_{DR}$ :
$\Rightarrow$ impulsion courte :

$P_{AC} = k1 \cdot P_A$
$P_{RLC} = k2 \cdot P_{RL}$
$0,1 \leq k1, k2 \leq 0,8$

b) $T_C < T_{RA}$     et     $T_{CD} > T_{CN}$     et     $P_D > N_{DR}$ :
$\Rightarrow$ impulsion normale :

$P_A, P_{RL}$
$P_{RL} = k3 \cdot P_A$

où

$P_C$ correspond à la durée de charge mesurée entre un instant initial $T_I$ correspondant au moment ou la tension d'amorçage est enclenchée et
un instant de charge $T_C$ lorsque la tension $U_g$ croissante devient égale à une valeur prédéterminée $V_T$;
$P_D$ correspond à la durée d'attente mesurée entre l'instant de charge $T_C$ et un instant d'attente $T_{CD}$ lorsque la tension $U_g$ est retombée à la valeur prédéterminée $V_T$;
$P_{CD}$ est la somme des durées de charge et d'attente;
$P_{RA}$ est la durée de référence inférieure entre l'instant initial $T_I$ et un instant de référence inférieur $T_{RA}$;
$N_{DR}$ est la durée d'attente maximale admise pour effectuer une impulsion courte;
$P_{CN}$ est la durée entre l'instant initial $T_I$ correspondant au moment où la tension d'amorçage est appliquée et l'instant limite $T_{CN}$ obtenu en ajoutant la durée d'attente maximale $N_{DR}$ à la durée de charge $P_C$;
$P_A$ est la durée de la période de montée;
$P_{AC}$ est la durée de la période de montée raccourcie;
$P_{RL}$ est la durée de la période intermédiaire;
$P_{RLC}$ est la durée de la période intermédiaire raccourcie;
k1, k2 et k3 sont des constantes de proportionnalité.

19. Dispositif selon la revendication 18, **caractérisé par le fait que** l'unité de commande (CP) est agencée pour que les conditions suivantes soient satisfaites :

$$0,3 \leq k1 = k2 \leq 0,6$$

et de préférence :

$$0,4 \leq k1 = k2 \leq 0,5 \text{ et } P_{RL} = 1 \text{ ou } 2\, P_A, P_{RLC} = 1 \text{ ou } 2\, P_{AC}$$

20. Dispositif selon la revendication 14, **caractérisé par le fait que** l'unité de commande (CP) est agencée pour que les durées de la période de montée ($P_A$, $P_{AC}$) et de la période intermédiaire ($P_{RL}$, $P_{RLC}$) soient reliées à la durée d'attente ($P_D$) ou à la somme ($P_{CD}$) des durées de charge et d'attente par deux fonctions continues ou discontinues donnant des valeurs réduites, mais non nulles, des durées des périodes de montée ($P_A$) et intermédiaire ($P_{RL}$) pour des valeurs réduites de la durée d'attente ($P_D$) ou de ladite somme ($P_{CD}$).

21. Dispositif selon l'une des revendications 10 à 20, **caractérisé par le fait qu'**une première borne de la source de tension ($E_1$) est reliée à la pièce (P) par une première branche ($B_1$) comprenant un premier interrupteur ($S_1$), **par le fait qu'**une seconde borne de la source de tension ($E_1$) est reliée à l'électrode-outil (F) par une seconde branche ($B_2$) comprenant un second interrupteur ($S_2$) et **par le fait qu'**il comprend une troisième branche ($B_3$) comportant une première diode ($D_3$) reliant les entrées des deux interrupteurs ($S_1$, $S_2$) et une quatrième branche ($B_4$) comportant une seconde diode ($D_4$) reliant les sorties des deux interrupteurs ($S_1$, $S_2$), l'unité de commande (CP) recevant des signaux d'un organe de mesure ($T_1$) de la tension à travers le gap (G) et adressant des signaux de commande aux interrupteurs ($S_1$, $S_2$).

22. Dispositif selon la revendication 21, **caractérisé par le fait qu'**il comprend un circuit d'amorçage (B5) des impulsions de courant branché en parallèle entre l'électrode-outil (F) et la pièce (P), ce circuit comportant un générateur d'amorçage (EA) recevant des signaux de commande de l'unité de commande (CP).

Fig.1

Fig.2A

Fig.2B

EP 1 234 630 A1

15

Fig.3

**Office européen des brevets**

# RAPPORT DE RECHERCHE EUROPEENNE

Numéro de la demande

EP 01 10 4691

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 41 25 742 A (FRAUNHOFER GES FORSCHUNG) 4 février 1993 (1993-02-04) | 1-6, 11-17, 20-22 | B23H1/02 |
| A | * colonne 4, ligne 30 - ligne 57 * <br> * colonne 5, ligne 9 - ligne 24 * <br> * colonne 8, ligne 22 - ligne 60 * <br> * revendications; figures * | 7-10,18, 19 | |
| Y | US 5 336 864 A (MARTIN ROLAND) 9 août 1994 (1994-08-09) | 1-7, 11-18 | |
| A | * colonne 1, ligne 66 - colonne 2, ligne 8 * <br> * colonne 2, ligne 28 - ligne 54 * <br> * colonne 6, ligne 3 - ligne 60 * <br> * abrégé; revendications; figures * | 8-10, 19-22 | |
| Y | CH 644 290 A (CHARMILLES SA ATELIERS) 31 juillet 1984 (1984-07-31) | 1-7, 11-18 | |
| A | * page 2, colonne de droite, ligne 31 - page 3, colonne de gauche, ligne 7 * <br> * revendications; figures * | 8-10, 19-22 | **DOMAINES TECHNIQUES RECHERCHES (Int.Cl.7)** <br> B23H |
| A | EP 0 412 262 A (MITSUBISHI ELECTRIC CORP) 13 février 1991 (1991-02-13) * page 4, ligne 2 - ligne 37 * * abrégé; figures * | 1-22 | |
| A | DE 41 25 744 A (FRAUNHOFER GES FORSCHUNG) 4 février 1993 (1993-02-04) * colonne 3, ligne 6 - ligne 10 * * colonne 6, ligne 21 - ligne 51 * * abrégé; figures * | 1-22 | |

Le présent rapport a été établi pour toutes les revendications

| Lieu de la recherche | Date d'achèvement de la recherche | Examinateur |
|---|---|---|
| LA HAYE | 18 juin 2001 | Haegeman, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 1 234 630 A1**

**ANNEXE AU RAPPORT DE RECHERCHE EUROPEENNE**
**RELATIF A LA DEMANDE DE BREVET EUROPEEN NO.**          EP 01 10 4691

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-06-2001

| Document brevet cité au rapport de recherche | | Date de publication | Membre(s) de la famille de brevet(s) | | Date de publication |
|---|---|---|---|---|---|
| DE 4125742 | A | 04-02-1993 | AUCUN | | |
| US 5336864 | A | 09-08-1994 | CH | 684828 A | 13-01-1995 |
| | | | CN | 1072122 A,B | 19-05-1993 |
| | | | JP | 2584567 B | 26-02-1997 |
| | | | JP | 5162016 A | 29-06-1993 |
| | | | KR | 9511671 B | 07-10-1995 |
| | | | RU | 2076024 C | 27-03-1997 |
| CH 644290 | A | 31-07-1984 | JP | 1624163 C | 18-11-1991 |
| | | | JP | 2042612 B | 25-09-1990 |
| | | | JP | 58040227 A | 09-03-1983 |
| EP 0412262 | A | 13-02-1991 | JP | 2042605 C | 09-04-1996 |
| | | | JP | 3073220 A | 28-03-1991 |
| | | | JP | 7061568 B | 05-07-1995 |
| | | | DE | 69004886 D | 13-01-1994 |
| | | | DE | 69004886 T | 05-05-1994 |
| | | | KR | 9309372 B | 02-10-1993 |
| | | | US | 5083001 A | 21-01-1992 |
| DE 4125744 | A | 04-02-1993 | AUCUN | | |

EPO FORM P0460

Pour tout renseignement concernant cette annexe : voir Journal Officiel de l'Office européen des brevets, No.12/82